# EUROPEAN PATENT SPECIFICATION

(11) **EP 3 517 266 B1**
(45) Date of publication and mention of the grant of the patent: **05.04.2023**
(21) Application number: 18211244.1
(22) Date of filing: 10.12.2018
(51) Int. Cl.: B27M 1/08, B23Q 3/155, B23Q 1/01

(54) **MACHINE TOOL WITH AN IMPROVED TOOL STORAGE**
WERKZEUGMASCHINE MIT VERBESSERTER WERKZEUGAUFBEWAHRUNG
MACHINE-OUTIL A STOCKAGE AMELIORE DE L'OUTIL

(30) Priority: 26.01.2018 IT 201800001947
(43) Date of publication of application: 31.07.2019
(73) Proprietor: SCM Group S.p.A., 47921 Rimini (RN) (IT)
(72) Inventor: BIANCHI, Fabio, 47921 RIMINI (IT)
(74) Representative: Tiburzi, Andrea

(56) References cited:
- EP-A- 2 656 965
- CN-B- 103 465 082
- DE-A1- 3 139 151
- DE-A1- 4 015 460
- DE-A1- 10 021 684
- DE-A1- 19 518 965
- DE-A1-102008 029 074
- DE-U1- 20 019 582
- NL-C1- 1 012 407
- US-A- 3 818 580

## Description

This invention relates to a machine tool with an improved storage system for tools.

More in detail, the invention relates to a machine tool according to the preamble of claim 1 for machining panels, for example wooden panels, equipped with one or more storage systems for the tools for machining the panels. Such a machine tool is known from DE 195 18 965 A1.

The description below relates to machine tool for machining wooden panels, but it is quite apparent how the same should not be considered limited to this specific use.

Machining centres are known which are formed by a base on which is provided a working plane equipped with a system for blocking the panels to be machined.

These machining centres also comprise a bridge or gantry movable along the main direction of extension of the working plane.

The movable gantry is also fitted with an operating head, which is also movable, equipped with a spindle for gripping the tools for machining the panels.

Normally, this type of machine tool is equipped with an apparatus for housing the machining tools, which is commonly known as the "storage system for tools".

The storage system for tools must be reachable both by the operating head for picking up the tools and by the operator for loading the tools in the storage system.

The storage systems for tools fitted to traditional machine tools are normally located in a position outside the machine tools to which they are associated, or inside the latter.

However, the prior art systems for storing machine tools have various drawbacks linked mainly to the difficulty for the operator to load the tools and also the complexity of the movements which the operating head must perform to reach the tools placed in the storage system.

In light of the above, the aim of the invention is to provide a machine tool with a storage system for tools which is easy to reach both by the operator for loading and unloading the tools from the storage system and by the operating units of the machine tool for picking up, that is to say, gripping, the tools required for the planned machining.

Another aim of the invention is to provide a machine tool with a system for storing tools which has a considerable capacity for storage of the tools.

The invention therefore provides a machine tool according to claim 1 for machining panels or similar pieces comprising: a working plane for providing a support, in use, to at least one panel or similar piece, said working plane extending according to a second axis and a first axis perpendicular to said second axis, there being defined in said working plane at least one first outer edge; operating means movable at least according to said first axis on said working plane and configured for coupling in use, in a movable manner, to at least one tool for performing at least one machining on said at least one panel or similar piece; at least one apparatus for housing tools for housing said at least one tool, there being defined in said at least one apparatus for housing tools at least a first substantially straight side and at least a second substantially straight side, in said at least a first side and said at least a second side there being provided a plurality of housing members for housing, in use, at least one tool; and movement means for moving at least one housing member between a first position facing said at least one first outer edge in such a way that said at least one housing member can be reached, in use, by an operator for loading or unloading at least one tool, and a second position facing said operating means for allowing said operating means to pick up and/or release at least one tool.

Further, according to an embodiment, said first position of said at least one housing member can be substantially aligned with said at least one first outer edge.

According to the invention, said at least one second side is substantially orthogonal to said first side.

Preferably, according to an embodiment, the orthogonal projection of said at least one apparatus for housing tools on said working plane has a substantially polygonal shape.

Advantageously, according to an embodiment, the orthogonal projection of said at least one apparatus for housing tools on said working plane can have a substantially triangular or quadrangular shape.

Conveniently, according to an embodiment, said plurality of housing members can be fixed on said first side and said second side of said at least one apparatus for housing tools, and said movement means can comprise motor means for rotating said at least one apparatus for housing tools about a third axis perpendicular to said first axis and said second axis.

Preferably, according to an embodiment, said at least one apparatus for housing tools is enabled to rotate about said third axis by angles of 90°.

Alternatively, according to an embodiment, said movement means can comprise: three wheels of which at least one a gear wheel, lying in a third plane parallel to said first axis and to said second axis, at least one flexible transmission member positioned on said third plane and wound around said at least three wheels, said at least one flexible transmission member being meshed with said at least one gear wheel and connected to said plurality of housing members, and motor means for rotating said at least one gear wheel.

Further, according to an embodiment, said at least a first outer edge may be substantially parallel to said first axis.

Advantageously, according to an embodiment, said first side and said second side can be parallel to said first axis or to said second axis.

Preferably, according to an embodiment, said at least one apparatus for housing tools comprises at least one first housing member positioned on a first plane and at least one second housing member positioned on a second plane, said first plane and said second plane being separated from each other and substantially at right angles to a third axis perpendiculars to said first axis and said second axis.

Conveniently, according to an embodiment, in said working plane can be defined a second outer edge and a third outer edge incident with said at a least a first outer edge, and said machine tool comprises the first apparatus for housing tools positioned at said second outer edge and a second apparatus for housing tools positioned at said third outer edge.

The invention is now described, by way of example and without limiting the scope of the invention, with reference to the accompanying drawings which illustrate preferred embodiments of it, in which:
Figure 1 is a top plan view of a machine tool with a storage system for tools according to a first embodiment of the invention;
Figure 2 is a front view of the machine shown in Figure 1;
Figure 3 is a top plan view of a machine tool with a storage system for tools according to a second embodiment of the invention; and
Figure 4 is a front view of the machine shown in Figure 3.

The similar parts will be indicated in the various drawings with the same numerical references.

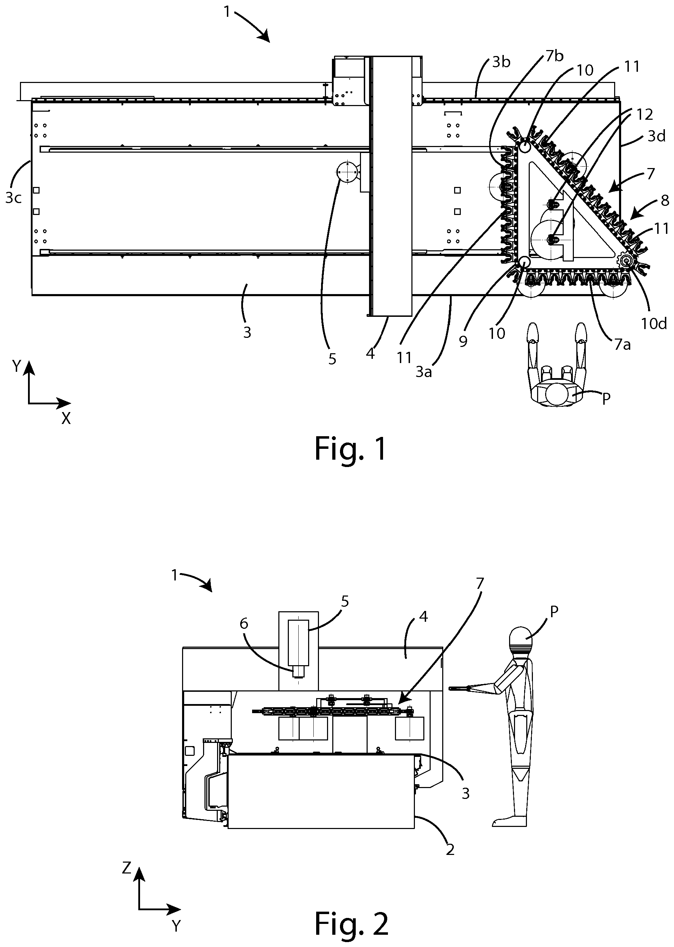

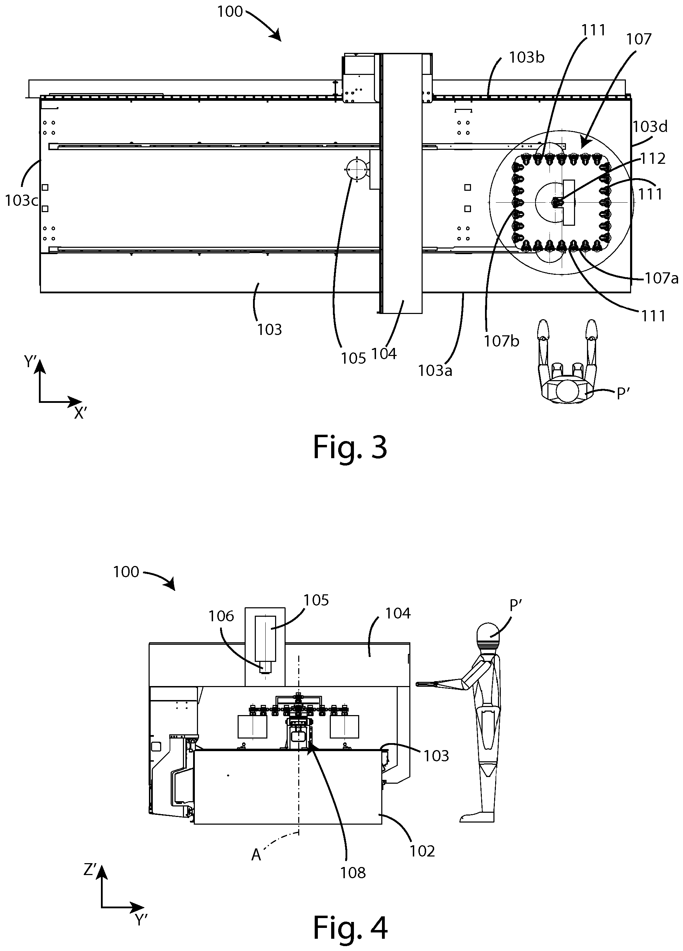

With reference to the Figures 2 and 3, the numeral 1 denotes a machine tool for machining wooden panels.

The machine tool 1 comprises a base 2, on which is provided a working plane 3 which extends, in a preferential manner, along a first axis X and is defined by a first outer edge 3a directed substantially according to the first axis X, and a second outer edge 3b parallel to and opposite the latter, a front edge 3c directed substantially perpendicularly to the outer edges 3a, 3b, and a rear edge 3d parallel to and opposite the front edge 3c.

The working plane 3 is equipped with a blocking system for blocking on the working plane 3 the panels to be machined.

The above-mentioned blocking system can comprise, for example, a plurality suction cups positioned in such a way as to be able to attach to the lower face of the panels to be machined, or a plurality of clamps configured in such a way as to be able to grip the two outer edges of the panels to secure them.

Alternatively, the blocking system may comprise a vacuum pump for generating a negative pressure beneath the working plane 3, in which are provided a plurality of through holes for allowing the negative pressure generated in this way to reach the panels to be machined and block them by attraction on the working surface 3.

Above the working plane 3 there is a bridge, that is to say, a gantry, 4 which is movable according to the first axis X, on which is mounted an operating head 5 movable along a second axis Y and a third axis Z.

The first axis X, the second axis Y and the third axis Z form a set of three Cartesian axes at right angles.

The operating head 5 is equipped with a rotary spindle 6 for allowing the gripping of a tool (not illustrated) for machining panels positioned on the working plane 3.

The machine tool 1 is also equipped with an apparatus for housing tools 7, also called the storage system for tools, designed to house various tools for the performance of various machining operations on the panels by the operating head 5.

The apparatus for housing tools 7 has, in plan, substantially the shape of a triangle with a first side 7a positioned substantially parallel to said first outer edge 3a and close to a zone of the latter in such a way as to be easily reachable by an operator P who wants to load or unload one or more tools from the apparatus for housing tools 7.

A second side 7b of the above-mentioned triangle is, on the other hand, positioned substantially according to the above-mentioned second axis Y inside the borders of the working plane 3 and facing towards the bridge 4 in such a way as to be easily reachable by the operating head 5 for gripping and arranging the tools in the apparatus for housing tools 7.

The apparatus for housing tools 7 comprises a movement system 8 consisting of a chain 9, or other flexible connection member, wound on two plain wheels 10, that is to say, without teeth, and wound and engaged on a gear wheel 10d, wherein said three wheels 10, 10d lie on a plane parallel to the first axis X and to the second axis Y at the corners of the above-mentioned triangle.

The movement system 8 also comprises a motor unit for rotating the above-mentioned gear wheel 10d about itself, in such a way as to move the chain 9 along the perimeter of the triangle.

According to a variant of this embodiment of the invention, the above-mentioned two plain wheels 10 could also be toothed and engaged with the chain 9.

The chain 9 is fitted with a plurality of housing members 11 each configured for housing a tool, that is to say, a tool holder.

More specifically, each housing member 11 has substantially the shape of a fork with the concavity facing towards the outside of the apparatus for housing tools 7.

The movement system 8 described above therefore allows the tools positioned on the housing members 11 to be fed along the perimeter of the apparatus for housing tools 7.

For this reason, thanks to the operation of the movement system 8, the tools loaded by the operator on the housing members 11 corresponding to the side 7a of the apparatus for housing tools 7 can be dragged, that is to say moved, to the side 7b to allow the relative picking up by the operating head 5.

The apparatus for housing tools 7 can, if necessary, comprise a further two upper housing members 12 for housing tools, positioned above the perimeter housing members 11 described above.

The upper housing members 12 can be connected to a special dedicated movement system, configured in such a way as to move them, when changing the tool, along the first axis X towards the bridge 4 for favouring the picking up or arranging of the tools by the operating head 5.

According to a variant of the embodiment just described, the machine tool 1 can also comprise two or more apparatuses for housing tools 7 of the type described above, positioned one above the other and equipped with a single movement system or with dedicated movement systems.

According to a further variant, the machine tool 1 can be equipped with two or more apparatuses for housing tools 7 positioned in different zones of the working plane 3, preferably close the front edge 3c and the rear edge 3d of the working plane 3 with the respective sides 7b facing each other.

With reference, on the other hand, to Figures 3 and 4, the numeral 100 indicates a second machine tool according to the invention.

The second machine tool 100 is identical to the machine tool 1 described above, with the exception of the apparatus for housing tools.

As in the machine tool 1 described above, the second machine tool 100 also comprises a base 102, a working plane 103 with the relative blocking system for blocking the panels to be machined, a bridge 104 which is movable along a first axis X' and an operating head 105 which is movable along a second axis Y' and a third axis Z' is equipped with a rotary spindle 106.

Moreover, also in this case the working plane 103 extends, in a preferential manner, along the first axis X' and is defined by a first outer edge 103a directed substantially according to the first axis X', a second outer edge 103b parallel to and opposite the latter, a front edge 103c directed substantially perpendicularly to the outer edges 103a, 103b, and a rear edge 103d parallel to and opposite the front edge 103c.

However, the second machine tool 100 comprises an apparatus for housing tools 107 different from the apparatus for housing tools 7 described above with regard to machine tool 1.

More specifically, the apparatus for housing tools 107 has, in plan, substantially the shape of a square with a side 107a oriented according to the first axis X' and positioned close to a zone of the first outer edge 103a of the working plane 103, in such a way as to be easily reachable by an operator P' who wants to load or unload one or more tools from the apparatus for housing tools 107.

A second side 107b of the above-mentioned square is, on the other hand, oriented substantially according to the second axis Y' inside the borders of the working plane 103 and facing towards the bridge 104 in such a way as to be easily reachable by the operating head 105 for gripping and arranging the tools in the apparatus for housing tools 107.

On the four sides of the apparatus for housing tools 107 is also provided a plurality of housing members 111 each for housing a tool, that is to say, a tool holder.

More specifically, the housing members 111 are similar in shape to those planned for the machine tool 1.

The apparatus for housing tools 107 also comprises a motor-driven rotation system 108 which is able to rotate the apparatus 107 about itself, through angular movements of 90°, about an axis of rotation A parallel to the third axis Z'.

According to a variant of the second machine tool 100, as an alternative to the rotation system 108 illustrated above, there may be a different movement system (not shown) similar to that described with regard to machine tool 1, that is to say, formed by a chain wrapped around and engaged on four gear wheels positioned at the corners of the above-mentioned square, and moved along the perimeter of the square by motor means.

The apparatus for housing tools 107 can, if necessary, comprise a further upper housing member 112 for housing tools, positioned higher than the perimeter housing members 111 described above.

The upper housing member 112 can be connected to a special dedicated movement system, configured in such a way as to move it, when changing the tool, along the first axis X' towards the bridge 104 for favouring the picking up or arranging of the tools by the operating head 105.

The rotation system 108, which allows the rotation about the above-mentioned rotation axis A, also acts on the same upper housing member 112.

According to a variant of the embodiment just described, the second machine tool 100 can also comprise two or more apparatuses for housing tools 107 of the type described above, positioned one above the other and equipped with a single rotation system or with dedicated rotation systems.

According to a further variant, the second machine tool 100 can be equipped with two or more apparatuses for housing tools 107 positioned in different zones of the working plane 103, preferably close the front edge 103c and the rear edge 103d of the working plane 103 with the respective second sides 107b facing each other.

According to further embodiments of the invention not shown in the accompanying drawings, the orthogonal projection of the above-mentioned apparatuses for housing tools on the relative working plane can have any polygonal shape, also different from a triangle or a square.

As may be inferred from the above description, the machine tools according to the description have storage systems for tools configured in such a way as to render particularly easy and safe the operations for loading and unloading tools by operators and also the operations for picking up and arranging tools by the operating head.

This invention is described by way of example only, without limiting the scope of application, according to its preferred embodiments, but it shall be understood that the invention may be modified and/or adapted by experts in the field without thereby departing from the scope of the invention, as defined in the claims herein.

## Claims

1. Machine tool (1, 100) for machining panels or similar pieces, comprising:
a working plane (3, 103) for providing rest, in use, to at least one panel or one similar piece, said working plane (3, 103) extending according to a second axis (Y, Y') and a first axis (X, X') perpendicular to said second axis (Y, Y'), at least one first outer edge (3a, 103a) being defined in said working plane (3, 103);
a gantry (4, 104) placed above the working plane (3, 103) and movable at least according to said first axis (X, X') on said working plane (3, 103);
operating means (5, 105) mounted on said gantry (4) and configured for coupling in use, in a movable manner, to at least one tool for performing at least one machining on said at least one panel or similar piece;
at least one apparatus for housing tools (7, 107) for housing said at least one tool, at least a first substantially straight side (7a, 107a) and at least a second substantially straight side (7b, 107b) being defined in said at least one apparatus for housing tools (7, 107), a plurality of housing members (11, 111) for housing, in use, at least one tool being provided in said at least one first side (7a, 107a) and said at least one second side (7b, 107b),
**characterized in that**
said at least one second side (7b, 107b) is oriented substantially according to said second axis (Y, Y') inside the borders of said working plane (3, 103) and facing towards the gantry (4, 104); and moving means for moving at least one housing member (11, 111) between a first position on the at least one first side (7a, 107a) facing said at least one first outer edge (3a, 103a) such that said at least one housing member (11, 111) is reachable, in use, by an operator for loading or unloading at least one tool, and a second position facing said operating means (5, 105) for allowing said operating means (5, 105) to take and/or release said at least one tool,
wherein said at least one second side (7b, 107b) is substantially orthogonal to said at least one first side (7a, 107a).

2. Machine tool (1, 100) according to claim 1, **characterized in that** said first position of said at least one housing member (11, 111) is substantially aligned with said at least one first outer edge (3a, 103a).

3. Machine tool (1, 100) according to any one of the preceding claims, **characterized in that** the orthogonal projection of said at least one apparatus for housing tools (7, 107) on said working plane (3, 103) has a substantially polygonal shape.

4. Machine tool (1, 100) according to claim 3, **characterized in that** the orthogonal projection of said at least one apparatus for housing tools (7, 107) on said working plane (3, 103) has a substantially triangular or quadrangular shape.

5. Machine tool (100) according to any one of the preceding claims, **characterized in that** said plurality of housing members (111) is fixed on said first side (107a) and said second side (107b) of said at least one apparatus for housing tools (107), and **in that** said moving means comprise driving means for driving said at least one apparatus for housing tools (107) in rotation around a third axis (Z') perpendicular to said first axis (X') and said second axis (Y').

6. Machine tool (100) according to claim 5, **characterized in that** said at least one apparatus for housing tools (107) is enabled to rotate around said third axis (Z') at angles of 90°.

7. Machine tool (1) according to any one of claims 1 to 4, **characterized in that** said moving means comprise:
at least three wheels (10, 10d) of which at least one wheel is toothed (10d), lying on a third plane parallel to said first axis (X) and said second axis (Y),
at least one flexible transmission member (9) arranged on said third plane and wrapped around said at least three wheels (10, 10d), said at least one flexible transmission member (9) being geared with said at least one toothed wheel (10d) and connected to said plurality of housing members (11), and
driving means for driving in rotation said at least one toothed wheel (10d).

8. Machine tool (1, 100) according to any one of the preceding claims, **characterized in that** said at least one first outer edge (3a, 103a) is substantially parallel to said first axis (X, X').

9. Machine tool (1, 100) according to any one of the preceding claims, **characterized in that** said first side (7a, 107a) and said second side (7b, 107b) are parallel to said first axis (X, X') or said second axis (Y, Y').

10. Machine tool (1, 100) according to any one of the preceding claims, **characterized in that** said at least one apparatus for housing tools (7, 107) comprises at least one housing member (11, 111) arranged on a first plane and at least a second housing member (11, 111) arranged on a second plane, said first plane and said second plane being separated from each other and substantially orthogonal to a third axis (Z, Z') perpendicular to said first axis (X, X') and said second axis (Y, Y').

11. Machine tool (1, 100) according to any one of the preceding claims, **characterized in that** a second outer edge (3c, 103c) and a third outer edge (3d, 103d) both incident to said at least one first outer edge (3a, 103a) are defined in said working plane (3, 103) and **in that** said machine tool (1, 100) comprises the first apparatus for housing tools (7, 107) arranged corresponding to said second outer edge (3c, 103c) and/or a second apparatus for housing tools arranged corresponding to said third outer edge (3d, 103d).

## Patentansprüche

1. Werkzeugmaschine (1, 100) zur Bearbeitung von Platten oder ähnlichen Teilen, die Folgendes umfasst: eine Arbeitsebene (3, 103), um im Betrieb mindestens eine Platte oder ein ähnliches Teil zu stützen, wobei sich die Arbeitsebene (3, 103) gemäß einer zweiten Achse (Y, Y') und einer ersten Achse (X, X') senkrecht zu der zweiten Achse (Y, Y') erstreckt, wobei mindestens eine erste Außenkante (3a, 103a) in der Arbeitsebene (3, 103) definiert ist;
ein Portal (4, 104), das oberhalb der Arbeitsebene (3, 103) angeordnet und zumindest gemäß der ersten Achse (X, X') auf der Arbeitsebene (3, 103) beweglich ist; Betätigungsmittel (5, 105), die an dem Portal (4) angebracht und so konfiguriert sind, dass sie im Gebrauch beweglich mit mindestens einem Werkzeug zur Durchführung mindestens einer Bearbeitung an der mindestens einen Platte oder einem ähnlichen Teil gekoppelt sind; mindestens einem Apparat zur Unterbringung von Werkzeugen (7, 107) zur Unterbringung des mindestens einen Werkzeugs, wobei mindestens eine erste im Wesentlichen gerade Seite (7a, 107a) und mindestens eine zweite im Wesentlichen gerade Seite (7b, 107b) in der mindestens einen Vorrichtung zur Unterbringung von Werkzeugen (7, 107) definiert sind, wobei eine Vielzahl von Unterbringungselementen (11, 111) zur Unterbringung mindestens eines Werkzeugs im Gebrauch in der mindestens einen ersten Seite (7a, 107a) und der mindestens einen zweiten Seite (7b, 107b) vorgesehen ist, **dadurch gekennzeichnet, dass** die mindestens eine zweite Seite (7b, 107b) im Wesentlichen gemäß der zweiten Achse (Y, Y') innerhalb der Grenzen der Arbeitsebene (3, 103) ausgerichtet und dem Portal (4, 104) zugewandt ist; und eine Bewegungseinrichtung zum Bewegen mindestens eines Gehäuseelements (11, 111) zwischen einer ersten Position auf der mindestens einen ersten Seite (7a, 107a), die der mindestens einen ersten Außenkante (3a, 103a) zugewandt ist, so dass das mindestens eine Gehäuseelement (11, 111) im Gebrauch von einem Bediener zum Laden oder Entladen mindestens eines Werkzeugs erreichbar ist, und eine zweite Position, die dem Betätigungsmittel (5, 105) zugewandt ist, um es dem Betätigungsmittel (5, 105) zu ermöglichen, das mindestens eine Werkzeug aufzunehmen und/oder freizugeben, wobei die mindestens eine zweite Seite (7b, 107b) im Wesentlichen orthogonal zu der mindestens einen ersten Seite (7a, 107a) ist.

2. Werkzeugmaschine (1, 100) nach Anspruch 1, **dadurch gekennzeichnet, dass** die erste Position des mindestens einen Gehäuseteils (11, 111) im Wesentlichen auf die mindestens eine erste Außenkante (3a, 103a) ausgerichtet ist.

3. Werkzeugmaschine (1, 100) nach einem der vorhergehenden Ansprüche, **dadurch gekennzeichnet, dass** die orthogonale Projektion des mindestens einen Apparates zur Aufnahme von Werkzeugen (7, 107) auf die Bearbeitungsebene (3, 103) eine im Wesentlichen polygonale Form aufweist.

4. Werkzeugmaschine (1, 100) nach Anspruch 3, **dadurch gekennzeichnet, dass** die orthogonale Projektion des mindestens einen Apparates zur Aufnahme von Werkzeugen (7, 107) auf die Arbeitsebene (3, 103) eine im Wesentlichen dreieckige oder viereckige Form aufweist.

5. Werkzeugmaschine (100) nach einem der vorhergehenden Ansprüche, **dadurch gekennzeichnet, dass** die mehreren Gehäuseteile (111) an der ersten Seite (107a) und der zweiten Seite (107b) des mindestens einen Apparates zur Aufnahme von Werkzeugen (107) befestigt sind, und dass die Bewegungsmittel Antriebsmittel zum Antreiben des mindestens einen Apparates zur Aufnahme von Werkzeugen (107) in Drehung um eine dritte Achse (Z') senkrecht zu der ersten Achse (X') und der zweiten Achse (Y') umfassen.

6. Werkzeugmaschine (100) nach Anspruch 5, **dadurch gekennzeichnet, dass** der mindestens eine Apparat zur Aufnahme von Werkzeugen (107) in der Lage ist, sich um die dritte Achse (Z') in Winkeln von 90° zu drehen.

7. Werkzeugmaschine (1) nach einem der Ansprüche 1 bis 4, **dadurch gekennzeichnet, dass** die Bewegungsmittel Folgendes umfassen:
mindestens drei Räder (10, 10d), von denen mindestens ein Rad (10d) gezahnt ist, die auf einer dritten Ebene parallel zu der ersten Achse (X) und der zweiten Achse (Y) liegen, mindestens ein flexibles Übertragungselement (9), das auf der dritten Ebene angeordnet und um die mindestens drei Räder (10, 10d) gewickelt ist, wobei das mindestens eine flexible Übertragungselement (9) mit dem mindestens einen Zahnrad (10d) in Eingriff steht und mit der Vielzahl von Gehäuseelementen (11) verbunden ist, und Antriebsmittel zum Drehantrieb des mindestens einen Zahnrads (10d).

8. Werkzeugmaschine (1, 100) nach einem der vorhergehenden Ansprüche, **dadurch gekennzeichnet, dass** die mindestens eine erste Außenkante (3a, 103a) im Wesentlichen parallel zu der ersten Achse (X, X') verläuft.

9. Werkzeugmaschine (1, 100) nach einem der vorhergehenden Ansprüche, **dadurch gekennzeichnet, dass** die erste Seite (7a, 107a) und die zweite Seite (7b, 107b) parallel zu der ersten Achse (X, X') oder der zweiten Achse (Y, Y') sind.

10. Werkzeugmaschine (1, 100) nach einem der vorhergehenden Ansprüche, **dadurch gekennzeichnet, dass** der mindestens eine Apparat zur Aufnahme von Werkzeugen (7, 107) mindestens ein Gehäuseelement (11, 111), das in einer ersten Ebene angeordnet ist, und mindestens ein zweites Gehäuseelement (11, 111), das in einer zweiten Ebene angeordnet ist, umfasst, wobei die erste Ebene und die zweite Ebene voneinander getrennt und im Wesentlichen orthogonal zu einer dritten Achse (Z, Z') sind, die senkrecht zu der ersten Achse (X, X') und der zweiten Achse (Y, Y') verläuft.

11. Werkzeugmaschine (1, 100) nach einem der vorhergehenden Ansprüche, **dadurch gekennzeichnet, dass** eine zweite Außenkante (3c, 103c) und eine dritte Außenkante (3d, 103d), die beide auf die mindestens eine erste Außenkante (3a, 103a) treffen, in der Bearbeitungsebene (3, 103) definiert sind, und dass die Werkzeugmaschine (1, 100) den ersten Apparat zur Aufnahme von Werkzeugen (7, 107), die entsprechend der zweiten Außenkante (3c, 103c) angeordnet ist, und/oder einen zweiten Apparat zur Aufnahme von Werkzeugen, die entsprechend der dritten Außenkante (3d, 103d) angeordnet ist, umfasst.

## Revendications

1. Une machine-outil (1, 100) pour des panneaux d'usinage ou des pièces similaires, comprenant:
un plan de travail (3, 103) pour fournir du repos, pendant l'utilisation, pour au moins un panneau ou une pièce similaire, ledit plan de travail (3, 103) s'étendant selon un axe secondaire (Y, Y') et un premier axe (X, X') perpendiculaire audit second axe (Y, Y'), au moins un premier bord extérieur (3a, 103a) étant défini dans ledit plan de travail (3, 103);
un support mobile (4, 104) placé au-dessus du plan de travail (3, 103) et déplaçable au moins selon le premier axe (X, X') sur ledit plan de travail (3, 103);
des moyens de fonctionnement (5, 105) montés sur ledit support mobile (4) et configurés pour coupler lors de l'utilisation, de manière mobile, pour au moins un outil pour exécuter au moins un usinage sur ledit panneau ou une pièce similaire;
au moins un appareil pour héberger des outils de construction (7, 107) pour le logement d'au moins un outil, au moins un premier côté sensiblement droit (7a, 107a) et au moins un deuxième côté sensiblement droit (7b, 107b) étant défini dans ledit appareil pour héberger des outils (7, 107), une pluralité d'éléments de boîtier (11, 111) pour héberger, lors de l'utilisation, au moins un outil étant fourni dans ledit premier côté (7a, 107a) et dans au moins ledit second côté 7b, 107 b),
**caractérisés par le fait:**
**que** ledit premier côté (7b, 107b) est orienté sensiblement selon ledit second axe (Y, Y') à l'intérieur des limites dudit plan de travail (3, 103) et face au portique (4, 104); et des moyens de déplacement pour déplacer au moins un élément de boîtier (11, 111) entre la première position sur un premier côté (7a, 107a) faisant face à au moins un premier bord extérieur (3a, 103a) de sorte qu'au moins un élément de boîtier (11, 111) est joignable, lors de l'utilisation, par un opérateur pour le chargement ou le déchargement d'au moins un outil, et une seconde position faisant face à des moyens de fonctionnement (5, 105) pour permettre auxdits moyens de fonctionnement (5, 105) de prendre ou lâcher au moins un outil, où au moins un second côté (7b, 107 b) est sensiblement orthogonal audit premier côté (7a, 107a).

2. Une machine-outil (1, 100) selon la revendication 1, **caractérisée par le fait que** la première position d'au moins un élément de boîtier (11, 111) est sensiblement alignée avec ledit premier bord extérieur (3a, 103a).

3. Une machine-outil (1, 100) selon l'une quelconque des revendications précédentes, **caractérisées par le fait que** la projection orthogonale d'au moins un appareil pour l'hébergement des outils (7, 107) sur ledit plan de travail (3, 103) possède une forme sensiblement polygonale.

4. Une machine-outil (1, 100) selon la revendication 3, **caractérisé par le fait que** la projection orthogonale d'au moins un appareil pour héberger les outils (7, 107) sur ledit plan de travail (3, 103) possédant une forme sensiblement triangulaire ou quadrangulaire.

5. Une machine-outil (100) selon l'une quelconque des revendications précédentes, **caractérisé par le fait que** ladite pluralité d'éléments de boîtier (111) est fixée sur ledit premier côté (107a) et ledit second côté (107b) d'au moins un appareil pour héberger des outils (107), et dans lesdits moyens de déplacement comprend des moyens d'entraînement pour l'entraînement d'au moins un appareil pour l'hébergement des outils (107) en rotation autour d'un troisième axe (Z') perpendiculaire audit axe (X') et ledit second axe (Y').

6. Une machine-outil (100) selon la revendication 5, **caractérisé par le fait qu'**au moins un appareil pour héberger les outils (107) est permis de tourner autour dudit troisième axe (Z') à des angles de 90°.

7. Une machine-outil (1) selon l'une quelconque des revendications précédentes 1 à 4, est **caractérisé par le fait que** les moyens de déplacement comprend: au moins trois roues (10, 10d) dont au moins une roue est dentée (10d), reposant sur un troisième plan parallèle audit premier axe (X) et dudit second axe (Y), au moins un élément de transmission flexible (9) disposé sur ledit troisième plan et entouré autour d'au moins trois roues (10, 10d), au moins un élément de transmission flexible (9) étant équipé d'au moins une roue dentée (10d) et connectée à ladite pluralité des éléments de boîtier (11), et des moyens d'entraînement en rotation de ladite roue édentée (10d).

8. Une machine-outil (1, 100) selon l'une quelconque des revendications précédentes, **caractérisée par le fait qu'**au moins un premier bord extérieur (3a, 103a) est sensiblement parallèle audit premier axe (X, X').

9. Une machine-outil (1, 100) selon l'une quelconque des revendications précédentes, **caractérisée par le fait que** ledit premier côté (7a, 107a) et ledit second côté (7b, 107b) sont parallèles audit premier axe (X, X') ou ledit second axe (Y, Y').

10. Une machine-outil (1, 100) selon l'une quelconque des revendications précédentes, **caractérisées par le fait que** dans au moins un appareil pour héberger les outils (7, 107) un élément de boîtier est compris (11, 111) disposé sur un premier plan et au moins un second élément de boîtier (11, 111) disposé sur un second plan, ledit premier plan et ledit second plan étant séparés l'un de l'autre et sensiblement orthogonal au troisième axe (Z, Z') perpendiculaire audit premier axe (X, X') et audit second axe (Y, Y').

11. Une machine-outil (1, 100) selon l'une quelconque des revendications précédentes, **caractérisées par le fait qu'**un deuxième bord extérieur (3c, 103c) et un troisième bord extérieur (3d, 103d) tous deux incidents à au moins un premier bord extérieur (3a, 103a) ils sont définis dans ledit plan de travail (3, 103) et que ladite machine-outil (1, 100) comprend le premier appareil pour l'hébergement d'outils (7, 107) disposé en fonction dudit second bord extérieur (3c, 103c) et/ou un second appareil pour l'hébergement d'outils est disposé en fonction dudit troisième bord extérieur (3d, 103d).
